(19) Europäisches Patentamt
European Patent Office
Office européen des brevets

(11) EP 1 655 348 A1

(12) # EUROPÄISCHE PATENTANMELDUNG

(43) Veröffentlichungstag:
**10.05.2006 Patentblatt 2006/19**

(51) Int Cl.:
***C09C 1/30*** *(2006.01)* ***B41M 5/00*** *(2006.01)*

(21) Anmeldenummer: **04105031.1**

(22) Anmeldetag: **13.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **ILFORD Imaging Switzerland GmbH
1723 Marly 1 (CH)**

(72) Erfinder:
- **Fürholz, Urs
1723, Marly (CH)**
- **Ruffieux, Vincent
1723, Marly (CH)**
- **Schär, Meinrad
1731, Ependes (CH)**

(54) **Aufzeichnungsmaterial für den Tintenstrahldruck**

(57) Es wird ein Verfahren zur Herstellung von Siliziumdioxid-Dispersionen beschrieben, das dadurch gekennzeichnet ist, dass die Siliziumdioxidoberfläche mit den Reaktionsprodukten aus einer Verbindung des dreiwertigen Aluminiums und mindestens eines Aminoorganosilans modifiziert wird, welche zuvor in einem eigenen Reaktionsschritt gebildet wurden. Weiter bezieht sich die vorliegende Erfindung auf Aufzeichnungsmaterialien für den Tintenstrahldruck, welche in einer Tintenaufnahmeschicht eine derartige Dispersion enthalten.

EP 1 655 348 A1

## Beschreibung

### Technisches Gebiet

Die vorliegende Erfindung bezieht sich auf ein Verfahren zur Herstellung von Siliziumdioxid-Dispersionen, das dadurch gekennzeichnet ist, dass die Siliziumdioxidoberfläche mit den Reaktionsprodukten aus einer Verbindung des dreiwertigen Aluminiums und mindestens eines Aminoorganosilans modifiziert wird, welche zuvor in einem eigenen Reaktionsschritt gebildet wurden. Weiter bezieht sich die vorliegende Erfindung auf Aufzeichnungsmaterialien für den Tintenstrahldruck, welche in einer Tintenaufnahmeschicht eine derartige Dispersion enthalten, sowie auf Beschichtungsmassen zur Herstellung solcher Aufzeichnungsmaterialien.

### Stand der Technik

Es gibt im wesentlichen zwei unterschiedliche Verfahren beim Tintenstrahldruck, nämlich den kontinuierlichen und den nichtkontinuierlichen Tintenstrahldruck.
Beim kontinuierlichen Tintenstrahldruck wird unter Druck aus einer Düse ein Tintenstrahl ausgestossen, der in einem gewissen Abstand von der Düse in einzelne Tröpfchen zerfällt. Die einzelnen Tröpfchen werden, je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, bei dem ungeladene Tröpfchen im Auffangbehälter aufgefangen werden.
Beim nichtkontinuierlichen Verfahren, dem sogenannten "Drop on demand", werden die Tintentropfen nur dann erzeugt und aus der Düse ausgestossen, wenn auf Grund der digitalen Daten ein Bildpunkt dargestellt werden muss.
Heutige Tintenstrahldrucker müssen aus wirtschaftlichen Gründen immer schneller drucken können. Für solche Drucker geeignete Aufzeichnungsmaterialien müssen deshalb die Tinten besonders rasch aufnehmen können. Für diesen Zweck besonders geeignet sind Aufzeichnungsmaterialien, die nanoporöse anorganische Verbindungen, vorzugsweise Oxide, insbesondere Aluminiumoxide oder Siliziumdioxid, oder Oxid/hydroxide, insbesondere Aluminiumoxid/hydroxide, enthalten. Solche Materialien sind als "nanoporöse" Aufzeichnungsmaterialien bekannt.

Solche heute erhältlichen Aufzeichnungsmaterialien erfüllen nicht alle an sie gestellten Anforderungen. Insbesondere bei Verwendung von Farbstofftinten müssen die Wasserfestigkeit und die Diffusionsfestigkeit der auf diese Materialien gedruckten Bilder verbessert werden. Bei Verwendung von Pigmenttinten muss der Oberflächenglanz der bedruckten Bilder verbessert werden, da sehr häufig wegen schlechter Verträglichkeit der Tinte mit der Aufnahmeschicht nicht die gewünschte Photoqualität erreicht wird. Besonders störend ist der unterschiedliche Glanz verschiedener Bildstellen. Zudem ist die industrielle Herstellbarkeit der bisher bekannten nanoporösen Aufzeichnungsmaterialien ungenügend.

In der Patentanmeldung DE 10'020'346 wird ein Aufzeichnungsmaterial vorgeschlagen, das in der Gasphase hergestelltes Siliziumdioxid mit einer Primärpartikelgrösse von höchstens 20 nm enthält, worin die Oberfläche des Siliziumdioxids mit Polyaluminiumhydroxychlorid modifiziert wurde.
In der Patentanmeldung WO 00/20'221 wird die Umsetzung von in der Gasphase hergestelltem Siliziumdioxid mit Aluminiumchlorhydrat beschrieben. Das umgesetzte Siliziumdioxid wird anschliessend in eine Tintenaufnahmeschicht von nanoporösen Aufzeichnungsmaterialien für den Tintenstrahldruck eingebracht.
Dieses Umsetzungsverfahren zeigt aber den Nachteil, dass für die Umsetzung grosse Mengen von Aluminiumchlorhydrat benötigt werden, die Umsetzungsgeschwindigkeit niedrig ist und die erhaltenen Dispersionen auf Grund ihres hohen Salzgehaltes eine schlechte Lagerstabilität besitzen. Die Dispersionen können nur bei einem tiefen pH-Wert eingesetzt werden, da sie bei höheren pH-Werten gelieren. Für die Härtung der Aufzeichnungsmaterialien müssen hohe Mengen des Härters Borsäure verwendet werden.

Die Patentanmeldung WO 02/094'573 beschreibt die Verwendung von in der Gasphase hergestelltem Siliziumdioxid, welches mit Aminoorganosilanen umgesetzt wurde, in Aufzeichnungsmaterialien für den Tintenstrahldruck.
Die Patentanmeldung WO 01/05'599 beschreibt die Verwendung von Siliziumdioxid-Pigmenten, welche mit kationischen Aminoorganosiloxanen umgesetzt wurden, in Aufzeichnungsmaterialien für den Tintenstrahldruck.
Die Patentanmeldung EP 0'983'867 beschreibt die Verwendung von kolloidalem Siliziumdioxid, welches mit Silanen der allgemeinen Formel $(R_1)_nSi(OR_2)_{4-n}$, worin mindestens einer der Substituenten $R_1$ eine Aminogruppe enthält, umgesetzt wurde, in Aufzeichnungsmaterialien für den Tintenstrahldruck.
Dieses Umsetzungsverfahren zeigt den Vorteil, dass zur Herstellung der modifizierten Dispersionen nur relativ geringe Mengen des Aminoorganosilans nötig sind und die Oberflächenmodifizierung in einem relativ grossen pH-Bereich erfolgen kann. Die Aufzeichnungsmaterialien brauchen auf Grund ihres höheren pH-Werts nur geringe Mengen von Borsäure zur Härtung.

Dieses Umsetzungsverfahren zeigt aber den Nachteil, dass Aminoorganosilane teuer sind und die modifizierten

Dispersionen nur in einem relativ schmalen pH-Bereich negativ geladene Substanzen fixieren.

## Zusammenfassung der Erfindung

Ziel der Erfindung ist die Bereitstellung von nanoporösen Aufzeichnungsmaterialien mit verbesserter Bildqualität (Grösse des Farbraums), verbesserter Wasserfestigkeit und verbesserter Diffusionsfestigkeit der bedruckten Aufzeichnungsmaterialien bei Verwendung von Tinten auf Farbstoffbasis.

Ein weiteres Ziel der Erfindung ist die Bereitstellung von nanoporösen Aufzeichnungsmaterialien mit verminderten Glanzunterschieden zwischen Bildstellen unterschiedlicher Farbe und Dichte bei Verwendung von Tinten auf Pigmentbasis.

Ein weiteres Ziel der Erfindung ist eine verbesserte Herstellbarkeit und Haltbarkeit der erfindungsgemässen Dispersionen von Siliziumdioxid, deren Oberfläche mit den Reaktionsprodukten aus einer Verbindung des dreiwertigen Aluminiums und mindestens eines Aminoorganosilans modifiziert wurde, eine verbesserte Herstellbarkeit und Haltbarkeit der auf den Träger aufzubringenden Beschichtungslösungen sowie eine verbesserte Gussqualität der erfindungsgemässen Aufzeichnungsmaterialien.

Ein solches Aufzeichnungsmaterial besteht aus einem Träger und mindestens einer darauf aufliegenden Tintenaufnahmeschicht, welche oberflächenmodifiziertes Siliziumdioxid enthält.

Wir haben nun überraschend gefunden, dass alle diese Verbesserungen mit Dispersionen von Siliziumdioxid erhalten werden, dessen Oberfläche mit den Reaktionsprodukten einer Verbindung des dreiwertigen Aluminiums und mindestens eines Aminoorganosilans modifiziert worden ist.

Die erfindungsgemässen nanoporösen Aufzeichnungsmaterialien für den Tintenstrahldruck enthalten neben dem umgesetzten nanokristallinen, nanoporösen Siliziumdioxid eines oder mehrere Bindemittel.

## Ausführliche Beschreibung der Erfindung

Wir haben überraschend gefunden, dass ein nanoporöses Aufzeichnungsmaterial für den Tintenstrahldruck, welches in einer Tintenaufnahmeschicht eine Dispersion von Siliziumdioxid, dessen Oberfläche mit den Reaktionsprodukten aus einer Verbindung des dreiwertigen Aluminiums (beispielsweise Aluminiumchlorhydrat) und mindestens eines Aminoorganosilans modifiziert worden ist, eine wesentlich bessere Farbwiedergabe zeigt als Aufzeichnungsmaterialien, worin die Oberfläche des Siliziumdioxids mit Aluminiumchlorhydrat oder mit einem Aminoorganosilan modifiziert worden ist. Bei Verwendung der erfindungsgemässen Dispersion werden die Wasserfestigkeit und die Diffusionsfestigkeit der mit wasserlöslichen Farbstoffen gedruckten Bilder verbessert. Beim Druck eines Bildes unter Verwendung von Pigmenttinten zeigt der Glanz von Bildstellen des erfindungsgemässen Aufzeichnungsmaterials mit unterschiedlicher Farbdichte wesentlich kleinere Unterschiede als bei einem Aufzeichnungsmaterials des Standes der Technik, in dem die Oberfläche des Siliziumdioxids mit Aluminiumchlorhydrat modifiziert worden ist.

Wir haben weiter überraschend gefunden, dass die Herstellung der erfindungsgemässen Dispersion sowie der Beschichtungslösungen gegenüber dem Stand der Technik wesentlich verbessert und vereinfacht wird. Weiter wird eine wesentlich verbesserte Gussqualität erhalten. Insbesondere treten kaum mehr grossflächige Giessfehler auf, bei denen die Aufnahmeschichtschicht vollständig fehlt und das Aufzeichnungsmaterial folglich an diesen Stellen überhaupt keine Tinte aufnehmen kann.

Das in den erfindungsgemässen Aufzeichnungsmaterialien verwendete synthetische Siliziumdioxid kann entweder in einem Nassverfahren durch Ausfällung (ausgefälltes Siliziumdioxid) oder in einem Gasphasenverfahren (pyrogenes Siliziumdioxid) hergestellt werden.

Ausgefälltes Siliziumdioxid kann beispielsweise im Nassverfahren durch Metathese von Natriumsilikat durch eine Säure oder durch Hindurchleiten durch eine Schicht aus Ionenaustauscherharz als Siliziumdioxidsol, durch Erhitzen und Reifen dieses Siliziumdioxidsols oder durch Gelieren eines Siliziumdioxidsols hergestellt werden.

Das Gasphasenverfahren durch Flammenpyrolyse zur Herstellung pyrogenen Siliziumdioxids wird auch als Trockenverfahren im Gegensatz zum Nassverfahren bezeichnet. Bei diesem Verfahren wird beispielsweise Siliziumtetrachlorid zusammen mit Wasserstoff und Sauerstoff zu Siliziumdioxid und Salzsäure umgesetzt. In diesem Verfahren können auch Silane wie beispielsweise Methyltrichlorsilan oder Trichlorsilan an Stelle von Siliziumtetrachlorid oder in Kombination mit Siliziumtetrachlorid eingesetzt werden.

Vorzugsweise wird in den erfindungsgemässen Aufzeichnungsmaterialien pyrogenes Siliziumdioxid verwendet.

Pyrogenes Siliziumdioxid besteht aus Aggregaten kleiner Primärteilchen. Diese Primärteilchen sind selber nicht porös. Die Aggregate sind hingegen porös und deshalb im Stande, rasch grosse Flüssigkeitsmengen zu absorbieren.

Die Aggregate des pyrogenen Siliziumdioxids haben normalerweise eine Grösse (mittlerer Durchmesser) von mehr als 100 nm. Bevorzugt sind Teilchen mit einer Grösse zwischen 100 nm und 500 nm, besonders bevorzugt mit einer Grösse zwischen 150 nm und 250 nm. Diese Grössenangaben beziehen sich auf die Aggregate. Die Primärteilchen haben eine

Grösse zwischen 1 nm und 100 nm. Bevorzugt wird eine Grösse zwischen 1 nm und 30 nm, besonders bevorzugt zwischen 5 nm und 15 nm.

Pyrogenes Siliziumdioxid hat eine spezifische Oberfläche zwischen 20 $m^2/g$ und 400 $m^2/g$. Bevorzugt wird eine spezifische Oberfläche zwischen 50 $m^2/g$ und 400 $m^2/g$. Besonders bevorzugt wird eine spezifische Oberfläche zwischen 90 $m^2/g$ und 330 $m^2/g$. Die spezifische Oberfläche wird nach dem BET-Verfahren bestimmt, wie es von S. Brunauer, P. H. Emmet und I. Teller in "Adsorption of Gases in Multimolecular Layers", Journal of the American Chemical Society 60, 309 (1938) beschrieben worden ist.

Zur Herstellung von erfindungsgemäss oberflächenmodifiziertem Siliziumdioxid für die erfindungsgemässen Aufzeichnungsmaterialien wird beispielsweise pyrogenes Siliziumdioxid bei hohen Scherraten zu einer zur Hauptsache wässrigen Lösung, welche die Reaktionsprodukte einer Verbindung des dreiwertigen Aluminiums (beispielsweise Aluminiumchlorhydrat) und mindestens eines Aminoorganosilans enthält, zugegeben. Dabei entsteht unter geeigneten Bedingungen eine oberflächenmodifizierte Dispersion von pyrogenem Siliziumdioxid, die nicht koaguliert. Das Gemisch, welches die Reaktionsprodukte einer Verbindung des dreiwertigen Aluminiums (beispielsweise Aluminiumchlorhydrat) und mindestens eines Aminoorganosilans enthält, zeigt eine hohe Pufferkapazität. Das basische Aminoorganosilan neutralisiert die bei der Hydrolyse der Verbindung des dreiwertigen Aluminiums (beispielsweise Aluminiumchlorhydrat) entstehende Salzsäure. Da die zur Oberflächenmodifikation des Siliziumdioxids benötigte minimale Menge der Verbindung des dreiwertigen Aluminiums (beispielsweise Aluminiumchlorhydrat) ist beim erfindungsgemässen Verfahren viel geringer ist als bei Umsetzung mit Aluminiumchlorhydrat. Die erfindungsgemässen oberflächenmodifizierten Dispersionen des Siliziumdioxids weisen einen viel geringeren Salzgehalt auf als bei der Modifizierung mit Aluminiumchlorhydrat.

Zur Herstellung der zur Hauptsache wässrigen Lösungen wird vorzugsweise deionisiertes Wasser verwendet. Dem Wasser können mit Wasser mischbare Lösungsmittel wie beispielsweise niedrige Alkohole (Methanol, Ethanol, Propanol usw.) oder Ketone wie beispielsweise Aceton zugesetzt werden.

Die zur Umsetzung verwendeten Reaktionsprodukte aus einer Verbindung des dreiwertigen Aluminiums (beispielsweise Aluminiumchlorhydrat) und mindestens eines Aminoorganosilans können sowohl durch Zugabe des Aminoorganosilans zu einer wässrigen Lösung der Verbindung des dreiwertigen Aluminiums (beispielsweise Aluminiumchlorhydrat) als auch in der umgekehrten Reihenfolge hergestellt werden. Die Umsetzung der Verbindung des dreiwertigen Siliziums und des Aminoorganosilans zu den Reaktionsprodukten erfolgt bei Temperaturen zwischen 10° C und 50° C während 5 Minuten bis 60 Minuten. Bevorzugt ist die Umsetzung bei Raumtemperatur während 10 Minuten bis 15 Minuten.

Bei der Reaktion der beiden Ausgangskomponenten werden Si-O-Al-Brücken gebildet, die mittels $^{27}$Al-Kernresonanzspektroskopie nachgewiesen werden konnten. Im Kernresonanzspektrum des Reaktionsgemischs treten neue Peaks mit einer Signallage bei 50 ppm bis 70 ppm auf, die für Si-O-Al-Brücken charakteristisch sind. Ihre Intensität nimmt mit der Menge des Aminoorganosilans zu. Die Umsetzung ist gemäss den Kernresonanzspektroskopiemessungen nach etwa 10 Minuten bei Raumtemperatur abgeschlossen.

Zur Herstellung des erfindungsgemässen oberflächenmodifizierten Siliziumdioxids können beispielsweise auch die Reaktionsprodukte aus einer Verbindung des dreiwertigen Aluminiums (beispielsweise Aluminiumchlorhydrat) und mindestens eines Aminoorganosilans zu einer wässrigen Dispersion von Siliziumdioxid zugegeben werden.

Die Oberflächenmodifizierung des Siliziumdioxids mit den Reaktionsprodukten aus einer Verbindung des dreiwertigen Aluminiums (beispielsweise Aluminiumchlorhydrat) und mindestens eines Aminoorganosilans verläuft rascher als die Oberflächenmodifizierung des Siliziumdioxids mit Aluminiumchlorhydrat. Deshalb kann bei der Oberflächenmodifizierung mit den Reaktionsprodukten aus einer Verbindung des dreiwertigen Aluminiums (beispielsweise Aluminiumchlorhydrat) und mindestens eines Aminoorganosilans entweder die Reaktionszeit verkürzt oder die Reaktionstemperatur erniedrigt werden.

Besonders bevorzugt für die Oberflächenmodifizierung mit den Reaktionsprodukten aus einer Verbindung des dreiwertigen Aluminiums (beispielsweise Aluminiumchlorhydrat) und mindestens eines Aminoorganosilans wird pyrogenes Siliziumdioxid.

An Stelle nur eines pyrogenen Siliziumdioxid-Pulvers kann eine Mischung verschiedener pyrogener Siliziumdioxid-Pulver mit unterschiedlichen Primärteilchengrössen eingesetzt werden. Die Umsetzung der Siliziumdioxid-Pulver mit den Reaktionsprodukten aus einer Verbindung des dreiwertigen Aluminiums (beispielsweise Aluminiumchlorhydrat) und mindestens eines Aminoorganosilans kann entweder für jedes Siliziumdioxid-Pulver allein oder mit der Mischung der verschiedenen Siliziumdioxid-Pulver erfolgen.

Die Dispergierung bei hohen Scherraten ergibt eine gleichmässige Verteilung der Reaktionsprodukte auf dem Siliziumdioxid. Weiter wird das rheologische Verhalten der Dispersion verbessert.

Bevorzugte Verbindungen des dreiwertigen Aluminiums sind Aluminiumchlorid, Aluminiumnitrat, Aluminiumacetat, Aluminiumformiat und Aluminiumchlorhydrat.

Geeignete Aminoorganosilane sind Aminoorganosilane der Formel (I)

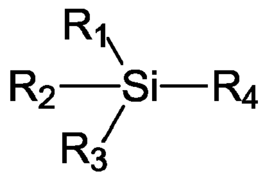

(I)

worin

$R_1$, $R_2$, $R_3$ unabhängig voneinander für Wasserstoff, einen Hydroxylrest, einen unsubstituierten oder substituierten Alkylrest mit 1 bis 6 Kohlenstoffatomen, einen unsubstituierten oder substituierten Arylrest, einen unsubstituierten oder substituierten Alkoxylrest mit 1 bis 6 Kohlenstoffatomen oder einen unsubstituierten oder substituierten Aryloxylrest stehen

und $R_4$ für einen organischen Rest steht, der mit mindestens einer primären, sekundären oder tertiären Aminogruppe substituiert ist.

Im Falle von substituierten $R_1$’ $R_2$ und $R_3$ werden die Substituenten unabhängig voneinander aus der Gruppe bestehend aus Thiol, Sulfid und Polyalkylenoxid ausgewählt. Geeignet ausgewählte Substituenten erleichtern beispielsweise die Oberflächenmodifizierung des Siliziumdioxids (verbesserte Rheologie der Dispersionen und der Beschichtungslösungen) und verbessern die Produkteigenschaften wie beispielsweise die Beständigkeit gegenüber Luftschadstoffen, die Lichtechtheit und die physikalischen Eigenschaften.
Anstelle der monomeren Aminoorganosilane können ebenfalls deren Kondensationsprodukte eingesetzt werden, wobei die Kondensationsreaktionen sowohl zwischen identischen als auch zwischen unterschiedlichen Aminoorganosilanen erfolgen können.

Bevorzugte Aminoorganosilane sind 3-Aminopropyltrimethoxysilan, N-(2-Aminoethyl)-3-aminopropyltrimethoxysilan, (3-Triethoxysilylpropyl)-diethylentriamin, 3-Aminopropyltriethoxysilan, N-(2-Aminoethyl)-3-amino-propyltriethoxysilan, (3-Tri-ethoxysilylpropyl)-diethylentriamin und deren Gemische.

In einer besonders bevorzugten Ausführungsart der Erfindung wird das Aminoorganosilan vor dem Zusatz einer Verbindung des dreiwertigen Aluminiums (beispielsweise Aluminiumchlorhydrat) zum Reaktionsgemisch mit $CO_2$ unter Bildung eines Ammoniumorganosilans (protonierte Form eines Aminoorganosilans) und Hydrogencarbonat umgesetzt. Dadurch wird der pH-Wert des Reaktionsgemisches, welches die Reaktionsprodukte aus einer Verbindung des dreiwertigen Aluminiums (beispielsweise Aluminiumchlorhydrat) und mindestens eines Aminoorganosilans enthält, gesenkt und seine Pufferkapazität erhöht. Dadurch lässt sich der Anteil der bei der Bildung der Reaktionsprodukte einer Verbindung des dreiwertigen Aluminiums (beispielsweise Aluminiumchlorhydrat) und mindestens eines Aminoorganosilans als unerwünschte Nebenprodukte entstehenden, sehr hochmolekularen und teilweise unlöslichen Aluminiumverbindungen reduzieren. Der pH-Wert bleibt folglich bei der Zugabe des unmodifizierten Siliziumdioxids annähernd konstant.

Die Dispersion des erfindungsgemäss oberflächenmodifizierten Siliziumdioxids wird vorteilhaft direkt zur Herstellung der Beschichtungsmasse der Tintenaufnahmeschicht eines Aufzeichnungsmaterials für den Tintenstrahldruck verwendet. Die Dispersion muss deshalb mindestens 24 Stunden ohne Sedimentation des umgesetzten Siliziumdioxids stabil sein und darf keine starken Viskositätsänderungen zeigen. Insbesondere darf sie nicht gelieren oder koagulieren. Die Dispersion enthält das erfindungsgemäss oberflächenmodifizierte Siliziumdioxid in einer Menge zwischen 5 und 50 Gewichtsprozent bezogen auf das Gesamtgewicht der Dispersion. Bevorzugt sind Mengen zwischen 10 und 30 Gewichtsprozent, besonders bevorzugt sind Mengen zwischen 15 und 25 Gewichtsprozent.

Die Oberflächenmodifizierung des Siliziumdioxids mit den Reaktionsprodukten aus einer Verbindung des dreiwertigen Aluminiums (beispielsweise Aluminiumchlorhydrat) und mindestens eines Aminoorganosilans führt zu einer positiven Oberflächenladung des Siliziumdioxids. Die farbgebenden Verbindungen (Farbstoffe oder Pigmente) in Tinten für den Tintenstrahldruck enthalten häufig ionisierbare Gruppen wie $SO_3H$, COOH, $PO_3H_2$ usw., welche die Löslichkeit der Farbstoffe erhöhen oder die Dispergierbarkeit der Pigmente verbessern. Die Farbstoffe sind deshalb in der zur Hauptsache wässrigen Tintenflüssigkeit nach der Dissoziation dieser Gruppen negativ geladen und werden deshalb von der positiven Ladung der Oberfläche des umgesetzten Siliziumdioxids elektrostatisch angezogen und fixiert.

Die Ladung der Oberfläche der oberflächenmodifizierten Siliziumdioxidteilchen kann durch die Messung des Zeta-Potenzials der Dispersion gemessen werden. Das Zeta-Potenzial nimmt proportional mit der Ladung der Oberfläche zu. Die Dispersion des oberflächenmodifizierten Siliziumdioxids hat zur Verbesserung der Fixierung der anionischen Farbstoffe oder Pigmente vorzugsweise ein positives Zeta-Potenzial.

Die Gesamtmenge der beiden Komponenten für die Herstellung der Reaktionsprodukte muss so gewählt werden, dass die meisten der Agglomerate des Siliziumdioxids mit den Reaktionsprodukten aus einer Verbindung des dreiwertigen Aluminiums (beispielsweise Aluminiumchlorhydrat) und mindestens eines Aminoorganosilans reagieren können. Die Gesamtmenge hängt von der Art der Verbindung des dreiwertigen Aluminiums, vom Molekulargewicht des Aminoorganosilans und der Anzahl der Aminogruppen im Molekül ab.

Die Menge der Verbindung des dreiwertigen Aluminiums liegt typischerweise zwischen 0.1 und 20 Gewichtsprozent bezogen auf die Menge des Siliziumdioxids. Bevorzugt ist ein Wert zwischen 0.5 und 10 Gewichtsprozent.

Die Gesamtmenge des Aminoorganosilans beziehungsweise des Gemisches von Aminoorganosilanen liegt typischerweise zwischen 0.1 und 10 Gewichtsprozent bezogen auf die Menge des Siliziumdioxids. Bevorzugt ist ein Wert zwischen 0.5 und 20 Gewichtsprozent.

Das Gewichtsverhältnis zwischen der Verbindung des dreiwertigen Aluminiums (beispielsweise Aluminiumchlorhydrat) und der Aminoorganosilane wird vorteilhaft so gewählt, dass bei der Mischung der beiden Komponenten der beiden Reagenzien der gewünschte pH-Wert erreicht wird. Bevorzugt wird ein Molverhältnis zwischen 0.1 und 2.0, besonders bevorzugt ist ein Molverhältnis zwischen 0.4 und 1.5, bezogen auf die Anzahl der Aluminiumatome und die Anzahl der Aminogruppen des Aminoorganosilans.

Der pH-Wert des Gemischs, das die Reaktionsprodukte enthält, wird im wesentlichen durch das Verhältnis der Anzahl Aluminiumatome multipliziert mit ihrer jeweiligen Ladung zur gesamten Anzahl der Aminogruppen bestimmt. Der Substituent $R_4$ des Aminoorganosilans kann unter Berücksichtigung dieses Aspekts dementsprechend ausgewählt werden. Der pH-Wert der Lösung, welche die Reaktionsprodukte der Verbindung des dreiwertigen Aluminiums und des Aminoorganosilans enthält, wird vorteilhaft so gewählt, dass er zwischen 3 und 10 liegt.

Das Verhältnis der Anzahl der Siliziumatome zur Anzahl der Aluminiumatom ist wichtig für die Struktur der gebildeten Reaktionsprodukte.

Das Aufzeichnungsmaterial kann neben dem erfindungsgemäss oberflächenmodifiziertem Siliziumdioxid zusätzlich noch andere, poröse oder nichtporöse, anorganische Verbindungen enthalten.

Zur Verbesserung der Stabilität der Bilder in verunreinigter Luft kann das erfindungsgemässe Aufzeichnungsmaterial neben dem oberflächenmodifiziertem Siliziumdioxid zusätzlich noch Salze des einwertigen Kupfers wie Kupfer(I)-Chlorid, Kupfer(I)-Bromid oder Kupfer(I)-Sulfit-Monohydrat, wie es in der Patentanmeldung EP 1’231’071 beschrieben worden ist, enthalten.

Zur weiteren Verbesserung der Stabilität der Bilder in verunreinigter Luft können dem erfindungsgemässen Aufzeichnungsmaterial neben den Salzen des einwertigen Kupfers zusätzlich Diketon-Verbindungen, wie in der Patentanmeldung EP 1’197’345 beschrieben worden ist, zugesetzt werden.

Zur nochmaligen Verbesserung der Stabilität der Bilder in verunreinigter Luft kann das Aufzeichnungsmaterial zusätzlich noch organische Schwefelverbindungen wie beispielsweise Thiodiethylenglykol enthalten.

Die Bindemittel sind im allgemeinen wasserlösliche Polymere. Besonders bevorzugt sind filmbildende Polymere.

Die wasserlöslichen Polymere umfassen beispielsweise natürliche oder daraus hergestellte modifizierte Verbindungen wie Albumin, Gelatine, Kasein, Stärke, Gummi arabicum, Natrium- oder Kaliumalginat, Hydroxyethylcellulose, Carboxymethylcellulose, α-, β- oder γ-Cyclodextrin usw. Wenn eines der wasserlöslichen Polymere Gelatine ist, so können alle bekannten Gelatinetypen verwendet werden, wie saure Schweinehautgelatine oder alkalische Knochengelatine, sauer oder basisch hydrolysierte Gelatinen, wie auch substituierte Gelatinen, beispielsweise phthalierte, acetylierte oder carbamoylierte Gelatine, oder mit Trimellithsäureanhydrid umgesetzte Gelatine.

Synthetische Bindemittel können ebenfalls verwendet werden und umfassen beispielsweise Polyvinylalkohol, Polyvinylpyrrolidon, vollständig oder teilweise verseifte Verbindungen von Copolymeren aus Vinylacetat und anderen Monomeren; Homopolymere oder Copolymere von ungesättigten Carbonsäuren wie Maleinsäure, (Meth)acrylsäure, Crotonsäure usw.; Homopolymere oder Copolymere aus sulfonierten Vinylmonomeren wie beispielsweise Vinylsulfonsäure, Styrolsulfonsäure usw. Ebenfalls können Homopolymere oder Copolymere aus Vinylmonomeren von (Meth)acrylamid; Homopolymere oder Copolymere anderer Monomerer mit Ethylenoxid; Polyurethane; Polyacrylamide; wasserlösliche Nylonpolymere; Polyester; Polyvinyllactame; Acrylamidpolymere; substituierter Polyvinylalkohol; Polyvinylacetale; Polymere aus Alkyl- und Sulfoalkylacrylaten und -methacrylaten; hydrolysierte Polyvinylacetate; Polyamide; Polyvinylpyridine; Polyacrylsäure; Copolymere mit Maleinsäureanhydrid; Polyalkylenoxide; Copolymere mit Methacrylamid und Copolymere mit Maleinsäure eingesetzt werden. Alle diese Polymere können auch als Mischungen verwendet werden.

Bevorzugte synthetische Bindemittel sind Polyvinylalkohol und Polyvinylpyrrolidon oder ihre Mischungen.

Diese Polymere können mit wasserunlöslichen natürlichen oder synthetischen hochmolekularen Verbindungen gemischt werden, insbesondere mit Acryllatices oder Styrolacryllatices.

Obwohl wasserunlösliche Bindemittel nicht explizit beansprucht werden, so sollen wasserunlösliche Polymere trotzdem als Systembestandteil angesehen werden.
Die oben erwähnten Polymere mit vernetzbaren Gruppen können mit Hilfe eines Vernetzers oder Härters zu praktisch wasserunlöslichen Schichten umgesetzt werden. Solche Vernetzungen können kovalent oder ionisch sein. Die Vernetzung oder Härtung der Schichten erlaubt eine Veränderung der physikalischen Schichteigenschaften, wie beispielsweise der Flüssigkeitsaufnahme, oder der Widerstandsfähigkeit gegen Schichtverletzungen.
Die Vernetzer und Härter werden auf Grund der zu vernetzenden wasserlöslichen Polymere ausgesucht.

Organische Vernetzer und Härter umfassen z. B. Aldehyde (wie Formaldehyd, Glyoxal oder Glutaraldehyd); N-Methylolverbindungen (wie Dimethylolharnstoff oder Methylol-Dimethylhydantoin); Dioxane (wie 2,3-Dihydroxydioxan); reaktive Vinylverbindungen (wie 1,3,5-Trisacryloyl-Hexahydro-s-Triazin oder Bis-(Vinylsulfonyl)ethylether), reaktive Halogenverbindungen (wie 2,4-Dichloro-6-Hydroxy-s-Triazin); Epoxide; Aziridine; Carbamoylpyridinverbindungen oder Mischungen zweier oder mehrere dieser erwähnten Vernetzer.
Anorganische Vernetzer und Härter umfassen beispielsweise Chromalaun, Aluminiumalaun oder vorzugsweise Borsäure.
Die Schichten können auch reaktive Substanzen enthalten, welche die Schichten unter Einwirkung von UV-Licht, Elektronenstrahlen, Röntgenstrahlen oder Wärme vernetzen.

Die Schichten können weiter durch den Zusatz von Füllstoffen modifiziert werden. Mögliche Füllstoffe sind z. B. Kaolin, Ca- oder Ba-Carbonate, Siliziumdioxid, Titandioxid, Bentonite, Zeolite, Aluminiumsilikat oder Calciumsilikat. Auch inerte organische Partikeln wie beispielsweise Kunststoffkügelchen können verwendet werden. Diese Kügelchen können aus Polyacrylaten, Polyacrylamiden, Polystyrol oder verschiedenen Copolymeren aus Acrylaten und Styrol bestehen. Die Füllstoffe werden auf Grund des beabsichtigten Gebrauchs der hergestellten Bilder ausgewählt. Einige dieser Füllstoffe können in transparenten Materialien nicht verwendet werden. Sie können aber positive Wirkungen in Aufsichtsmaterialien besitzen. Sehr oft erreicht man mit dem Einsatz solcher Füllstoffe eine gewünschte matte Oberfläche.
Die Aufzeichnungsmaterialien können weitere lösliche Metallsalze enthalten, beispielsweise Erdalkalisalze oder Salze der seltenen Erden.
In den erfindungsgemässen Aufzeichnungsmaterialien ist mindestens eine Tintenaufnahmeschicht nebst allfälligen Hilfsschichten auf einen Träger aufgebracht.
Eine grosse Vielfalt an Trägern ist bekannt und wird auch eingesetzt. So können alle Träger, die bei der Herstellung von photographischen Materialien verwendet werden, eingesetzt werden. Verwendet werden beispielsweise transparente Träger aus Celluloseestern wie Cellulosetriacetat, Celluloseacetat, Cellulosepropionat, oder Celluloseacetat/butyrat, Polyester wie Polyethylenterephthalat oder Polyethylennaphthalat, Polyamide, Polycarbonate, Polyimide, Polyolefine, Polyvinylacetale, Polyether, Polyvinylchlorid und Polyvinylsulfone. Bevorzugt werden Polyester, insbesondere Polyethylenterephthalat oder Polyethylennaphthalat wegen ihrer ausgezeichneten Dimensionsstabilität. Bei den in der photographischen Industrie eingesetzten opaken Trägern können beispielsweise Barytpapier, mit Polyolefinen beschichtete Papiere, weissopake Polyester wie beispielsweise Melinex® der Firma DuPont eingesetzt werden. Besonders bevorzugt sind polyolefinbeschichtete Papiere oder weissopaker Polyester.
Es ist vorteilhaft, diese Träger, insbesondere Polyester, vor dem Beguss mit einer Substrierschicht zu versehen, um die Haftung der Tintenaufnahmeschichten auf dem Träger zu verbessern. Solche Substrierschichten sind in der photographischen Industrie wohlbekannt und enthalten z. B. Terpolymere aus Vinylidenchlorid, Acrylnitril und Acrylsäure oder aus Vinylidenchlorid, Methylacrylat und Itaconsäure. An Stelle der Substrierschicht können die Träger vor dem Beguss auch einer Coronaentladung ausgesetzt werden.
Ebenfalls als Träger können unbeschichtete Papiere verschiedener Typen verwendet werden, die in ihrer Zusammensetzung und in ihren Eigenschaften grosse Unterschiede aufweisen können. Pigmentierte Papiere und Hochglanzpapiere können ebenfalls verwendet werden, wie auch Metallfolien beispielsweise aus Aluminium.
Die Schichten können ebenfalls auf textile Fasermaterialien aus beispielsweise Polyamiden, Polyester, Baumwolle, Viskose und Wolle aufgebracht werden.

Die erfindungsgemässen Tintenaufnahmeschichten werden im allgemeinen aus wässrigen Lösungen oder Dispersionen, die alle nötigen Komponenten enthalten, gegossen. In vielen Fällen werden Netzmittel als Begusshilfsmittel zugesetzt, um das Giessverhalten und die Schichtgleichmässigkeit zu verbessern. Neben ihrer Wirkung während des Giessvorgangs können diese Verbindungen auch einen Einfluss auf die Bildqualität haben und können deshalb dementsprechend ausgewählt werden. Obwohl solche oberflächenaktiven Verbindungen in der Erfindung nicht beansprucht werden, bilden sie trotzdem einen wesentlichen Bestandteil der Erfindung.
Zusätzlich zu den schon erwähnten Bestandteilen können die erfindungsgemässen Aufzeichnungsmaterialien zusätzliche Verbindungen enthalten, um seine Eigenschaften weiter zu verbessern, so beispielsweise optische Aufheller zur Verbesserung des Weissgrades, wie Stilbene, Cumarine, Triazine, Oxazole oder weitere dem Fachmann bekannte Verbindungen.
Zur Verbesserung der Lichtechtheit können UV-Absorber, wie 2-Hydroxybenztriazole, 2-Hydroxybenzophenone, Triazin-Derivate oder Zimtsäure-Derivate. Die Menge des UV-Absorbers beträgt 200 mg/m$^2$ bis 2000 mg/m$^2$, vorzugsweise 400 mg/m$^2$ bis 1000 mg/m$^2$. Der UV-Absorber kann in jede Schicht des erfindungsgemässen Aufzeichnungsmaterials eingebracht werden, besonders vorteilhaft ist aber, wenn er in die oberste Schicht eingebracht wird.
Es ist weiter bekannt, dass die im Tintenstrahldruck hergestellten Bilder durch den Zusatz von Radikalfängern, Stabilisatoren, Reduktionsmitteln und Antioxidanzien geschützt werden können. Beispiele solcher Verbindungen sind sterisch gehinderte Phenole, sterisch gehinderte Amine, Chromanole, Ascorbinsäure, Phosphinsäuren und deren Derivate, schwefelhaltige Verbindungen wie Sulfide, Mercaptane, Thiocyanate, Thioamide oder Thioharnstoffe.
Die erwähnten Verbindungen können als wässrige Lösungen zu den Giesslösungen zugesetzt werden. Falls die Verbindungen nicht genügend wasserlöslich sind, können sie durch andere, bekannte Verfahren in die Giesslösungen eingebracht werden. So können die Verbindungen beispielsweise in einem mit Wasser mischbaren organischen Lösungsmittel wie niedere Alkohole, Glykole, Ketone, Ester oder Amide gelöst werden. Es ist auch möglich, die Verbindungen als feinkörnige Dispersionen, als Ölemulsionen, als Cyclodextran-Einschlussverbindungen oder als Latex, der die Verbindung enthält, in die Giesslösung einzubringen.

Normalerweise hat das erfindungsgemässe Aufzeichnungsmaterial eine Trockenschichtdicke von 0.5 $\mu$m bis 100 $\mu$m, insbesondere aber von 5 $\mu$m bis 50 $\mu$m.

Die Giesslösungen können auf verschiedene Arten auf den Träger aufgebracht werden. Die Giessverfahren schliessen beispielsweise den Extrusionsguss, den Luftmesserguss, den Schlitzguss, den Kaskadenguss und den Vorhangguss ein. Die Giesslösungen können auch mit einem Sprühverfahren aufgebracht werden. Die Tintenaufnahmeschichten können aus mehreren Einzelschichten bestehen, die einzeln nacheinander oder gemeinsam aufgebracht werden können.
Die Einzelschichten können sich in der Art des verwendeten pyrogenen Siliziumdioxids (insbesondere seiner spezifischer Oberfläche), der Umsetzung mit den Reaktionsprodukten aus einer Verbindung des dreiwertigen Aluminiums und mindestens eines Aminoorganosilans, im Verhältnis der Bindemittel zum Siliziumdioxid und in der Härtermenge unterscheiden.
Ein Träger kann auch beidseitig mit Tintenaufnahmeschichten begossen werden. Es ist auch möglich, auf der Rückseite eine antistatische Schicht oder eine Schicht zur Verbesserung der Planlage aufzubringen. Das gewählte Giessverfahren schränkt die Erfindung aber in keiner Art und Weise ein.

Tinten für den Tintenstrahldruck bestehen im wesentlichen aus einer flüssigen Trägersubstanz und einem darin gelösten oder dispergierten Farbstoff oder Pigment. Die flüssige Trägersubstanz für Tintenstrahldrucktinten ist im allgemeinen Wasser oder eine Mischung aus Wasser und einem mit Wasser mischbaren Lösungsmittel wie Ethylenglykol, Glykole mit höherem Molekulargewicht, Glycerin, Dipropylenglykol, Polyethylenglykol, Amide, Polyvinylpyrrolidon, N-Methylyrrolidon, Cyclohexylpyrrolidon, Carbonsäuren und deren Ester, Ether, Alkohole, organische Sulfoxide, Sulfolan, Dimethylformamid, Dimethylsulfoxid, Cellosolve, Polyurethane und Acrylate.

Die nichtwässrigen Tintenbestandteile dienen allgemein als Feuchthalter, Hilfslösungsmittel, Viskositätsregler, Eindringhilfsmittel oder Trocknungsbeschleuniger. Die organischen Verbindungen besitzen meistens einen Siedepunkt, der über dem von Wasser liegt. Tinten für den kontinuierlichen Tintenstrahldruck können weiter anorganische oder organische Salze zur Erhöhung der Leitfähigkeit enthalten. Beispiele solcher Salze sind Nitrate, Chloride, Phosphate, und die wasserlöslichen Salze wasserlöslicher organischer Säuren wie Acetate, Oxalate und Citrate. Die Farbstoffe oder Pigmente, die zur Herstellung der zusammen mit den erfindungsgemässen Aufzeichnungsmaterialien verwendbaren Tinten eingesetzt werden können, enthalten praktisch alle bekannten Klassen dieser farbigen Verbindungen. Typische Beispiele verwendeter Farbstoffe oder Pigment sind in der Patentanmeldung EP 0'559'324 aufgeführt. Die erfindungsgemässen Aufzeichnungsmaterialien können mit fast allen dem Stand der Technik entsprechenden Tinten verwendet werden.

Zusätzlich können die Tinten weitere Zusätze enthalten wie oberflächenaktive Substanzen, optische Aufheller, UV-Absorber, Lichtstabilisatoren, Konservierungsmittel, Fällmittel wie mehrfach geladene Metallverbindungen und polymere Verbindungen.
Die Beschreibung der Tinten dient nur als Illustration und ist in bezug auf die Erfindung in keiner Weise einschränkend.
Die vorliegende Erfindung wird durch die folgenden Beispiele näher beschrieben, ohne dass sie dadurch in irgendeiner Weise eingeschränkt würde.

**Prüfungen**

**1. Grösse des aufgespannten Volumens im Farbraum (Gamut)**

Auf die erfindungsgemässen Aufzeichnungsmaterialien wurden mit den Tintenstrahldruckern Epson 890, Canon S 900 und HP 970 jeweils mit den entsprechenden Originaltinten Farbfelder in den Farben Gelb, Rot, Purpur, Blau, Blaugrün, Grün und Schwarz in der Druckstufe 100 % gedruckt. Die folgenden Druckereistellungen wurden verwendet:

- HP 970: Photo Ret, Best, Premium Photo Paper, Glossy
- Epson 890: PQ Glossy Film, 720 dpi, No Color Adjust
- Canon S 900: Photo Paper Pro, High, Graphic, Normal

Nach den Angaben von G. Wyszecki und W. Stiles, "Color Science Concepts and Methods, Quantitative Data and Formulae", Verlag John Wiley & Sons, 2. Ausgabe 1982, ISBN 0-471-02106-7, Seiten 164 - 169 und Seite 829, wurden die Farbkoordinaten L*a*b* der Farben Gelb, Rot, Purpur, Blau, Blaugrün, Grün, Schwarz und Weiss gemessen und das durch die acht Farben aufgespannte Volumen des L*a*b*-Farbraums berechnet. Dazu wurden die durchsichtigen, bedruckten Aufzeichnungsmaterialien auf eine weisse, reflektierende Unterlage gelegt.
Farbraumberechnungen hängen von einer grossen Anzahl Faktoren wie Dichte, Druckereinstellung und relative Feuchte ab. Diese Faktoren wurden für alle Aufzeichnungsmaterialien konstant gehalten.

**2. Farbstoffdiffusion**

Das verwendete Verfahren wird im wesentlichen von R. Hofmann, E. Baumann und M. Schär in "Print Performance Evaluation of Ink-jet Media: Gamut, Drying, Permanence", IS & T's NIP15: International Conference on Digital Printing Technologies, ISBN 0-89208-222-4, Seiten 408 - 411 beschrieben.
Auf die erfindungsgemässen Aufzeichnungsmaterialien wurden mit den Tintenstrahldruckern HP 5652, Canon i 990 und Epson R 300 jeweils mit den entsprechenden Originaltinten Farbfelder in den Farben Gelb, Rot, Purpur, Blau, Blaugrün, Grün und Schwarz in der Druckstufe 100 % gedruckt. Die gedruckten Farbfelder sind quadratisch und haben eine Seitenlänge von je 118 Pixel. Ein einzelnes Farbfeld ist durch jeweils 11 in horizontaler und 11 in vertikaler Richtung angeordnete weisse Linien in 144 einzelne Farbquadrate von je 8 Pixeln Seitenlänge unterteilt. Die weissen Linien haben eine Breite von 2 Pixeln. Die folgenden Druckereistellungen wurden verwendet:

- HP 5552: HP-Premium High Glossy Film, best
- Epson 890: Photopaper Pro, high, manual, graphic, normal
- Canon S 900: Premium Glossy Photo Paper, Photo, High Speed, ICM.

Die bedruckten Aufzeichnungsmaterialien wurden 24 Stunden bei einer Temperatur von 23°C bei einer relativen Feuchtigkeit von 50 % getrocknet. Anschliessend wurden die optischen Dichten der Farbfelder bestimmt. Nachher wurden die bedruckten Aufzeichnungsmaterialien 7 Tage bei einer Temperatur von 40°C und einer relativen Feuchtigkeit von 80 % gelagert und erneut die optischen Dichten gemessen.
Der Wert der Farbstoffdiffusion ist die prozentuale Differenz der optischen Dichten vor und nach der Lagerung des Farbfeldes mit dem grössten Dichteunterschied.

**3. Farbverschiebung im Graufeld**

Auf die erfindungsgemässen Aufzeichnungsmaterialien wurden mit den Tintenstrahldruckern HP 5652, CANON I 990 und Epson R 300 jeweils mit den entsprechenden Originaltinten Gelb, Purpur und Blaugrün drei Graufelder der Druckstufen 30 %, 45 % und 60 % gedruckt. Die folgenden Druckereistellungen wurden verwendet:

- HP 5552: HP-Premium High Glossy Film, best
- Epson 890: Photopaper Pro, high, manual, graphic, normal
- Canon S 900: Premium Glossy Photo Paper, Photo.

Die bedruckten Aufzeichnungsmaterialien wurden 24 Stunden bei einer Temperatur von 23°C und einer relativen Feuchtigkeit von 50 % getrocknet. Anschliessend wurden deren L*a*b*-Farbkoordinaten bestimmt. Nachher wurden die bedruckten Aufzeichnungsmaterialien 7 Tage bei einer Temperatur von 40°C und einer relativen Feuchtigkeit von 80 % gelagert und erneut die L*a*b*-Farbkoordinaten bestimmt.
Für jedes Graufeld wurde anhand der gemessenen L*a*b*-Werte vor und nach der Lagerung die Gesamtfarbabweichung $\Delta E^*$ nach der folgenden Formel berechnet:

$$\Delta E^* = \sqrt{(\Delta L^*)^2 + (\Delta a^*)^2 + (\Delta b^*)^2}$$

Mass der Farbabweichung ist der höchste der drei gemessenen Werte.

**4. Glanz mit Pigmenttinten**

Auf die erfindungsgemässen Aufzeichnungsmaterialien wurden mit den Druckern Epson 2100 und Epson R 800 rechteckige Felder des Dreifarbenschwarz der Grösse 3 x 4 cm unter Verwendung der Original-Pigmenttinten mit den visuellen Dichten 0 % - 100 % (in 10 %-Stufen) gedruckt. Die folgenden Druckereistellungen wurden verwendet:

- Epson 2100: Glossy Paper P-W, 720 dpi, no color adjustment, HS off
- Epson R 800: Premium Glossy Photo Paper, Photo, Gloss Auto, HS on, ICM, no color adjustment.

Der Glanz der Flächen mit einer Dichte von 50 % wurde bei einem Winkel von 20° in Bezug auf die Musteroberfläche mit einem mit einem Glanzmessgerät Byk-Gardner Micro-Tri-Gloss gemessen.

**5. Gussqualität**

Die Gussqualität wurde optisch erfasst. Die typische Grösse der Gussfehler beträgt:

- Microcrack: 100 μm - 500 μm
- Schichtöffnung: 3 mm - 10 mm.

**Beispiele**

**Beispiel 1**

Dispersion

8.8 g Aluminiumchlorhydrat (Locron P, erhältlich bei Clariant AG, Muttenz, Schweiz) wurden bei einer Temperatur von 20° C in 782 g deionisiertem Wasser aufgelöst und unter sehr guter Rührung mit 8.8 g N-(2-Aminoethyl)-3-aminopropyltrimethoxysilan (erhältlich bei Degussa, Düsseldorf, Deutschland) versetzt. Nach 15 Minuten Reaktionszeit (Bildung der Reaktionsprodukte aus Aluminiumchlorhydrat und dem Aminoorganosilan) wurden 200 g pyrogenes Siliziumdioxid (Cab-O-Sil® M-5, erhältlich bei Cabot Corporation, Billerica, USA) portionenweise unter sehr guter Rührung bei hohen Scherraten zugegeben. Nach beendeter Zugabe des pyrogenes Siliziumdioxids wurde die Dispersion während 15 Minuten mit einem Rotor-Stator-Mixer gerührt. Anschliessend wurde die Dispersion auf eine Temperatur von 60° C aufgeheizt und zur Oberflächenmodifizierung des Siliziumdioxids 1 Stunde bei dieser Temperatur gehalten. Die Dispersion zeigte die in Tabelle 1 aufgeführten Eigenschaften:

Tabelle 1

| Eigenschaft | Wert |
|---|---|
| pH | 4.85 |
| Gehalt an Siliziumdioxid | 20 Gewichtsprozent |
| Viskosität | 50 mPas |
| Mittlere Teilchengrösse | 42 nm |
| Zeta-Potenzial | + 31 mV |

Giesslösung

Bei einer Temperatur von 45° C wurden 4.8 g feste Borsäure zu 600 g dieser Dispersion zugegeben. Nach der Auflösung der Borsäure wurden 300 g einer wässrigen Lösung von Polyvinylalkohol (10 %, erhältlich als Mowiol

4088 bei Clariant AG, Muttenz, Schweiz) zugegeben und anschliessend 0.8 g einer wässrigen Lösung des Netzmittels Olin 10G (5.23 %, erhältlich bei Arch Chemicals, Norwalk, USA). Die Giesslösung wurde zum Schluss mit deionisiertem Wasser auf ein Endgewicht von 1000 g verdünnt.

Guss

140 g/$m^2$ dieser Giesslösung wurden bei einer Temperatur von 40° C mittels eines Stabgiessers auf einen Polyethylenterephthalatträger aufgebracht und anschliessend wurde der begossene Träger 60 Minuten bei einer Temperatur von 35° C getrocknet. 1 $m^2$ des getrockneten Aufzeichnungsmaterials enthält 16.8 g des eingesetzten, unmodifizierten pyrogenen Siliziumdioxids.

**Beispiel 2**

Dispersion

8.8 g Aluminiumchlorhydrat wurden bei einer Temperatur von 20° C in 782 g deionisiertem Wasser aufgelöst und unter sehr guter Rührung mit 8.8 g N-(2-Aminoethyl)-3-aminopropyltrimethoxysilan. Nach 15 Minuten Reaktionszeit (Bildung der Reaktionsprodukte aus Aluminiumchlorhydrat und dem Aminoorganosilan) wurden 200 g pyrogenes Siliziumdioxid (Cab-O-Sil® H-5, erhältlich bei Cabot Corporation, Billerica, USA) portionenweise unter sehr guter Rührung bei hohen Scherraten zugegeben. Nach beendeter Zugabe des pyrogenen Siliziumdioxids wurde die Dispersion während 15 Minuten mit einem Rotor-Stator-Mixer gerührt. Anschliessend wurde die Dispersion auf eine Temperatur von 60° C aufgeheizt und zur Oberflächenmodifizierung des Siliziumdioxids 1 Stunde bei dieser Temperatur gehalten. Die Dispersion zeigte die in Tabelle 2 aufgeführten Eigenschaften:

Tabelle 2

| Eigenschaft | Wert |
|---|---|
| pH | 4.90 |
| Gehalt an Siliziumdioxid | 20 Gewichtsprozent |
| Viskosität | 60 mPas |
| Mittlere Teilchengrösse | 40 nm |
| Zeta-Potenzial | + 29 mV |

Giesslösung

Bei einer Temperatur von 45° C wurden 4.8 g feste Borsäure zu 600 g dieser Dispersion zugegeben. Nach der Auflösung der Borsäure wurden 300 g einer wässrigen Lösung des Polyvinylalkohols Mowiol 4088 (10 %) zugegeben und anschliessend 0.8 g der wässrigen Lösung des Netzmittels Olin 10G (5.23 %). Die Giesslösung wurde zum Schluss mit deionisiertem Wasser auf ein Endgewicht von 1000 g verdünnt.

Guss

140 g/$m^2$ dieser Giesslösung wurden bei einer Temperatur von 40° C mittels eines Stabgiessers auf einen Polyethylenterephthalatträger aufgebracht und anschliessend wurde der begossene Träger 60 Minuten bei einer Temperatur von 35° C getrocknet. 1 $m^2$ des getrockneten Aufzeichnungsmaterials enthält 16.8 g des eingesetzten, unmodifizierten pyrogenen Siliziumdioxids.

**Vergleichsbeispiel C-1**

Dispersion

200 g pyrogenes Siliziumdioxid Cab-O-Sil® M-5 wurden portionenweise unter sehr guter Rührung bei hohen Scherraten bei einer Temperatur von 20° C zu einer Mischung von 764 g deionisiertem Wasser, 33.8 g Aluminiumchlorhydrat Locron P und 2.0 g Kaliumhydroxid zugegeben. Nach beendeter Zugabe des pyrogenen Siliziumdioxids wurde die Dispersion während 15 Minuten mit einem Rotor-Stator-Mixer gerührt. Anschliessend wurde die Dispersion auf eine

Temperatur von 60° C aufgeheizt und zur Oberflächenmodifizierung des Siliziumdioxids 3 Stunden bei dieser Temperatur gehalten. Die Dispersion zeigte die in Tabelle 3 aufgeführten Eigenschaften:

Tabelle 3

| Eigenschaft | Wert |
|---|---|
| pH | 3.40 |
| Gehalt an Siliziumdioxid | 20 Gewichtsprozent |
| Viskosität | 20 mPas |
| Mittlere Teilchengrösse | 46 nm |
| Zeta-Potenzial | + 30 mV |

Giesslösung

Bei einer Temperatur von 45° C wurden 4.8 g feste Borsäure zu 600 g dieser Dispersion zugegeben. Nach der Auflösung der Borsäure wurden 300 g einer wässrigen Lösung des Polyvinylalkohols Mowiol 4088 (10 %) zugegeben und anschliessend 0.8 g der wässrigen Lösung von Olin 10G (5.23 %). Die Giesslösung wurde zum Schluss mit deionisiertem Wasser auf ein Endgewicht von 1000 g verdünnt.

Guss

140 g/$m^2$ dieser Giesslösung wurden bei einer Temperatur von 40° C mittels eines Stabgiessers auf einen Polyethylenterephthalatträger aufgebracht und anschliessend wurde der begossene Träger 60 Minuten bei einer Temperatur von 35° C getrocknet. 1 $m^2$ des getrockneten Aufzeichnungsmaterials enthält 16.8 g des eingesetzten, unmodifizierten pyrogenen Siliziumdioxids.

**Vergleichsbeispiel C - 2**

Dispersion

200 g pyrogenes Siliziumdioxid Cab-O-Sil® M-5 wurden portionenweise unter sehr guter Rührung bei hohen Scherraten bei einer Temperatur von 20° C zu einer Mischung von 788 g deionisiertem Wasser und 0.77 g Salzsäure (37 %) zugegeben. Nach beendeter Zugabe des pyrogenen Siliziumdioxids und weiteren 10 Minuten Rührzeit wurde sehr langsam und unter sehr guter Rührung bei hohen Scherraten 11.4 g einer wässrigen Lösung von N-(2-Aminoethyl)-3-aminopropyltrimethoxysilan (10 %) zugegeben. Die erhaltene Dispersion von oberflächenmodifiziertem Siliziumdioxid wurde während 15 Minuten mit einem Rotor-Stator-Mixer gerührt. Anschliessend wurde die Dispersion auf eine Temperatur von 60° C aufgeheizt und zur Umsetzung des Siliziumdioxids 1 Stunde bei dieser Temperatur gehalten. Die Dispersion zeigte die in Tabelle 4 aufgeführten Eigenschaften:

Tabelle 4

| Eigenschaft | Wert |
|---|---|
| pH | 4.10 |
| Gehalt an Siliziumdioxid | 20 Gewichtsprozent |
| Viskosität | 20 mPas |
| Mittlere Teilchengrösse | 36 nm |
| Zeta-Potenzial | + 29 mV |

Giesslösung

Bei einer Temperatur von 45° C wurden 4.8 g feste Borsäure zu 600 g dieser Dispersion zugegeben. Nach der Auflösung der Borsäure wurden 300 g einer wässrigen Lösung des Polyvinylalkohols Mowiol 4088 (10 %) zugegeben und anschliessend 0.8 g der wässrigen Lösung des Netzmittels Olin 10G (5.23 %). Die Giesslösung wurde zum Schluss

mit deionisiertem Wasser auf ein Endgewicht von 1000 g verdünnt.

Guss

140 g/m$^2$ dieser Giesslösung wurden bei einer Temperatur von 40° C mittels eines Stabgiessers auf einen Polyethylenterephthalatträger aufgebracht und anschliessend wurde der begossene Träger 60 Minuten bei einer Temperatur von 35° C getrocknet. 1 m$^2$ des getrockneten Aufzeichnungsmaterials enthält 16.8 g des eingesetzten, unmodifizierten pyrogenen Siliziumdioxids.

**Beispiel 3**

Dispersion

88.8 g einer wässrigen Lösung von N-(2-Aminoethyl)-3-aminopropyltrimethoxysilan (10 %) wurden bei Raumtemperatur mit $CO_2$-Gas gesättigt. Dabei sank der pH-Wert von 10.8 auf 6.8. Diese Lösung wurde unter starkem Rühren zu einer Lösung von 8.8 g Aluminiumchlorhydrat in 702 g deionisiertem Wasser gegeben. Nach 15 Minuten Reaktionszeit (Bildung der Reaktionsprodukte aus Aluminiumchlorhydrat und dem Aminoorganosilan) war der pH-Wert auf 6.1 gesunken (mit der wässrigen Lösung des Aminoorganosilans beträgt der pH-Wert 8.2) wurden 200 g pyrogenes Siliziumdioxid Cab-O-Sil® M-5 portionenweise unter sehr guter Rührung bei hohen Scherraten zugegeben. Nach beendeter Zugabe des pyrogenen Siliziumdioxids wurde die Dispersion während 15 Minuten mit einem Rotor-Stator-Mixer gerührt. Anschliessend wurde die Dispersion auf eine Temperatur von 60° C aufgeheizt und zur Oberflächenmodifizierung des Siliziumdioxids 1 Stunde bei dieser Temperatur gehalten. Die Dispersion zeigte die in Tabelle 5 aufgeführten Eigenschaften:

Tabelle 5

| Eigenschaft | Wert |
|---|---|
| pH | 5.2 |
| Gehalt an Siliziumdioxid | 20 Gewichtsprozent |
| Viskosität | 30 mPas |
| Mittlere Teilchengrösse | 39 nm |
| Zeta-Potenzial | 34 mV |

Giesslösung

Bei einer Temperatur von 45° C wurden 4.8 g feste Borsäure zu 600 g dieser Dispersion zugegeben. Nach der Auflösung der Borsäure wurden 300 g einer wässrigen Lösung des Polyvinylalkohols Mowiol 4088 (10 %) zugegeben und anschliessend 0.8 g der wässrigen Lösung des Netzmittels Olin 10G (5.23 %). Die Giesslösung wurde zum Schluss mit deionisiertem Wasser auf ein Endgewicht von 1000 g verdünnt.

Guss

140 g/m$^2$ dieser Giesslösung wurden bei einer Temperatur von 40° C mittels eines Stabgiessers auf einen Polyethylenterephthalatträger aufgebracht und anschliessend wurde der begossene Träger 60 Minuten bei einer Temperatur von 35° C getrocknet. 1 m$^2$ des getrockneten Aufzeichnungsmaterials enthält 16.8 g des eingesetzten, unmodifizierten pyrogenen Siliziumdioxids.

**Beispiel 4**

Dispersion

6.25 g Aluminiumnitrat-nonahydrat (erhältlich bei Fluka Chemie AG, Buchs, Schweiz) wurden in 785 g deionisiertem Wasser bei einer Temperatur von 20° C aufgelöst und unter sehr guter Rührung wurden 8.8 g N-(2-Aminoethyl)-3-aminopropyltrimethoxysilan zugegeben. Nach 15 Minuten Reaktionszeit (Bildung der Reaktionsprodukte aus Aluminiumnitrat-nonahydrat und dem Aminoorganosilan) wurden 200 g pyrogenes Siliziumdioxid Cab-O-Sil® M-5 portionenweise unter sehr guter Rührung bei hohen Scherraten zugegeben. Nach beendeter Zugabe des pyrogenen Siliziumdioxids wurde die Dispersion während 15 Minuten mit einem Rotor-Stator-Mixer gerührt. Anschliessend wurde die Dispersion auf eine Temperatur von 60° C aufgeheizt und zur Oberflächenmodifizierung des Siliziumdioxids 1 Stunde bei dieser Temperatur gehalten. Die Dispersion zeigte die in Tabelle 6 aufgeführten Eigenschaften:

Tabelle 6

| Eigenschaft | Wert |
|---|---|
| pH | 4.69 |
| Gehalt an Siliziumdioxid | 20 Gewichtsprozent |
| Viskosität | 27 mPas |
| Mittlere Teilchengrösse | 40 nm |
| Zeta-Potenzial | +32 mV |

Giesslösung

Bei einer Temperatur von 45° C wurden 4.8 g feste Borsäure zu 600 g dieser Dispersion zugegeben. Nach der Auflösung der Borsäure wurden 300 g einer wässrigen Lösung des Polyvinylalkohols Mowiol 4088 (10 %) zugegeben und anschliessend 0.8 g der wässrigen Lösung des Netzmittels Olin 10G (5.23 %). Die Giesslösung wurde zum Schluss mit deionisiertem Wasser auf ein Endgewicht von 1000 g verdünnt.

Guss

140 g/m$^2$ dieser Giesslösung wurden bei einer Temperatur von 40° C mittels eines Stabgiessers auf einen Polyethylenterephthalatträger aufgebracht und anschliessend wurde der begossene Träger 60 Minuten bei einer Temperatur von 35° C getrocknet. 1 m$^2$ des getrockneten Aufzeichnungsmaterials enthält 16.8 g des eingesetzten, unmodifizierten pyrogenen Siliziumdioxids.

**Beispiel 5 und Vergleichsbeispiel C - 5**

Das Beispiel 5 und das Vergleichsbeispiel C - 5 entsprechen im Wesentlichen dem Beispiel 1 und dem Vergleichsbeispiel C - 1. Die Beschichtungslösungen wurden jedoch im Vorhangguss auf polyethylenbeschichtetes Papier aufgebracht.

Die Menge des eingesetzten, unmodifizierten pyrogenen Siliziumdioxids wurde auf 21.0 g/m$^2$ erhöht.

**Ergebnisse**

Die berechneten Grössen des aufgespannten Farbräume sind in Tabelle 7 zusammengestellt.

Tabelle 7

| Beispiel | Grösse des aufgespannten Farbraums | | |
|---|---|---|---|
| | Drucker CANON S 900 | Drucker EPSON 890 | Drucker HP 970 |
| 1 | 513'000 | 490'000 | 338'000 |
| C - 1 | 457'000 | 464'000 | 286'000 |
| C - 2 | 476'000 | 459'000 | 277'000 |
| 2 | 555'000 | 556'000 | 358'000 |

Der Vergleich der Ergebnisse in Tabelle 7 zeigt sofort, dass das erfindungsgemässen Aufzeichnungsmaterial für den Tintenstrahldruck, in dem die Oberflächenmodifizierung des pyrogenen Siliziumdioxids mit den Reaktionsprodukten aus Aluminiumchlorhydrat und dem Aminoorganosiloxan N-(2-Aminoethyl)-3-aminopropyltrimethoxysilan erfolgte (Beispiel 1), für alle 3 Drucker einen wesentlich grösseren aufgespannten Farbraum aufweist als die Vergleichsbeispiele, bei denen die Oberflächenmodifizierung des pyrogenen Siliziumdioxids entweder mit Aluminiumchlorhydrat (Vergleichsbeispiel C - 1) oder mit dem Aminoorganosilan N-(2-Aminoethyl)-3-aminopropyltrimethoxysilan (Vergleichsbeispiel C - 2) erfolgte.

Das Aufzeichnungsmaterial mit dem oberflächenmodifizierten Siliziumdioxid Cab-O-Sil® H-5 (Beispiel 2) zeigt wegen der kleineren mittleren Teilchengrösse einen noch grösseren Farbraum als das Aufzeichnungsmaterial mit dem oberflächenmodifizierten Siliziumdioxid Cab-O-Sil® M-5 (Beispiel 1).

Die Ergebnisse der Glanzmessung sind in Tabelle 8 zusammengestellt:

Tabelle 8

| Beispiel | Glanz des Dreifarbenschwarz | |
|---|---|---|
| | Drucker EPSON 2100 | Drucker EPSON R 800 |
| 5 | 49.2 % | 77.8 % |
| C-5 | 29.6 % | 44.1% |

Der Vergleich der Ergebnisse in Tabelle 8 zeigt sofort, dass das erfindungsgemässen Aufzeichnungsmaterial für den Tintenstrahldruck, in dem die Oberflächenmodifizierung des pyrogenen Siliziumdioxids mit den Reaktionsprodukten aus Aluminiumchlorhydrat und dem Aminoorganosiloxan N-(2-Aminoethyl)-3-aminopropyltrimethoxysilan erfolgte (Beispiel 5), für die beiden Drucker mit Pigmenttinten einen viel höheren Glanz des Dreifarbenschwarz aufweist als das Vergleichsbeispiel C - 5, bei dem die Oberflächenmodifizierung des pyrogenen Siliziumdioxids mit Aluminiumchlorhydrat erfolgte.

Die Ergebnisse der Beurteilung der Gussqualität sind in Tabelle 9 zusammengestellt:

Tabelle 9

| Beispiel | Gussqualität | |
|---|---|---|
| | Anzahl Minicracks pro A4-Blatt | Anzahl Schichtöffnungen pro 450 $m^2$ |
| 5 | 2 | 0 |
| C-5 | 50 | 12 |

Die Ergebnisse in Tabelle 9 zeigen sofort, dass das erfindungsgemässen Aufzeichnungsmaterial für den Tintenstrahldruck, in dem die Oberflächenmodifizierung des pyrogenen Siliziumdioxids mit den Reaktionsprodukten aus Aluminiumchlorhydrat und dem Aminoorganosiloxan N-(2-Aminoethyl)-3-aminopropyltrimethoxysilan erfolgte (Beispiel 5), eine wesentlich bessere Gussqualität aufwies als das Aufzeichnungsmaterial für den Tintenstrahldruck, in dem die Oberflächenmodifizierung des pyrogenen Siliziumdioxids mit Aluminiumchlorhydrat erfolgte (Vergleichsbeispiel C - 5). Die Ergebnisse der Farbstoffdiffusion sind auch im Vergleich mit den im Handel erhältlichen nanoporösen Aufzeichnungsmaterialien ILFORD Smooth Gloss, Epson PGPP und Mitsubishi SG 2575 in Tabelle 10 zusammengestellt.

Tabelle 10

| Beispiel | Farbstoffdiffusion (%) | | |
|---|---|---|---|
| | HP 5652 | Canon I 990 | Epson R 300 |
| 5 | 36.5 | 53.2 | 13.3 |
| C - 5 | 73.5 | 74.6 | 39.2 |
| ILFORD Smooth Gloss | 69.3 | 88.2 | 29.3 |
| Epson PGPP | 73.5 | 80.0 | 26.5 |
| Mitsubishi SG 2575 | 77.8 | 88.2 | 25.0 |

Die Ergebnisse in Tabelle 10 zeigen deutlich, dass das erfindungsgemässe Aufzeichnungsmaterial für den Tintenstrahldruck, in dem die Oberflächenmodifizierung des pyrogenen Siliziumdioxids mit den Reaktionsprodukten aus Aluminiumchlorhydrat und dem Aminoorganosiloxan N-(2-Aminoethyl)-3-aminopropyltrimethoxysilan erfolgte (Beispiel 5), eine wesentlich geringere Farbstoffdiffusion aufweist als das Aufzeichnungsmaterial für den Tintenstrahldruck, in dem die Oberflächenmodifizierung des pyrogenen Siliziumdioxids mit Aluminiumchlorhydrat erfolgte (Vergleichsbeispiel C - 6). Das erfindungsgemässe Aufzeichnungsmaterial zeigte auch eine wesentlich geringere Farbstoffdiffusion als die

im Handel erhältlichen nanoporösen Aufzeichnungsmaterialien ILFORD Smooth Gloss, Epson PGPP und Mitsubishi SG 2575.

Die Ergebnisse der Farbverschiebung der Graufelder sind in der Tabelle 11 zusammengestellt.

Tabelle 11

| Beispiel | Farbverschiebung | | |
|---|---|---|---|
| | HP 5652 | Canon I 990 | Epson R 300 |
| 5 | 1.7 | 9.3 | 4.9 |
| C - 5 | 6.8 | 11.4 | 9.1 |
| ILFORD Smooth Gloss | 8.2 | 11.8 | 5.1 |
| Epson PGPP | 5.5 | 13.6 | 6.4 |
| Mitsubishi SG 2575 | 6.1 | 12.5 | 8.9 |

Die Ergebnisse in Tabelle 11 zeigen deutlich, dass das erfindungsgemässen Aufzeichnungsmaterial für den Tintenstrahldruck, in dem die Oberflächenmodifizierung des pyrogenen Siliziumdioxids mit den Reaktionsprodukten aus Aluminiumchlorhydrat und dem Aminoorganosiloxan N-(2-Aminoethyl)-3-aminopropyltrimethoxysilan erfolgte (Beispiel 5), eine wesentlich geringere Farbverschiebung des Graufeldes aufweist als das Aufzeichnungsmaterial für den Tintenstrahldruck, in dem die Oberflächenmodifizierung des pyrogenen Siliziumdioxids mit Aluminiumchlorhydrat erfolgte (Vergleichsbeispiel C - 5). Das erfindungsgemässe Aufzeichnungsmaterial zeigte auch eine wesentlich geringere Farbverschiebung des Graufeldes als die im Handel erhältlichen nanoporösen Aufzeichnungsmaterialien ILFORD Smooth Gloss, Epson PGPP und Mitsubishi SG 2575.

## Patentansprüche

1. Verfahren zur Herstellung von Dispersionen von oberflächenmodifiziertem Siliziumdioxid, **dadurch gekennzeichnet, dass** die Oberfläche des Siliziumdioxids mit den Reaktionsprodukten aus einer Verbindung des dreiwertigen Aluminiums und mindestens eines Aminoorganosilans modifiziert wird.

2. Verfahren zur Herstellung von Dispersionen von oberflächenmodifiziertem Siliziumdioxid gemäss Anspruch 1, **dadurch gekennzeichnet, dass** die Reaktionsprodukte Al-O-Si-Brücken enthalten.

3. Verfahren zur Herstellung von Dispersionen von oberflächenmodifiziertem Siliziumdioxid gemäss den Ansprüchen 1 und 2, **dadurch gekennzeichnet, dass** als Verbindung des dreiwertigen Aluminiums Aluminiumchlorid, Aluminiumnitrat, Aluminiumacetat, Aluminiumformiat, Aluminiumchlorhydrat oder Gemische dieser Verbindungen verwendet werden.

4. Verfahren zur Herstellung von Dispersionen von oberflächenmodifiziertem Siliziumdioxid gemäss den Ansprüchen 1 bis 3, **dadurch gekennzeichnet, dass** das Aminoorganosilan die Formel (I) besitzt

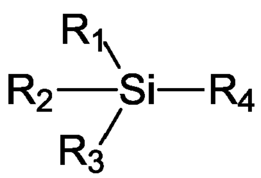

(I)

worin

$R_1$, $R_2$, $R_3$ unabhängig voneinander für Wasserstoff, einen Hydroxylrest, einen unsubstituierten oder substituierten Alkylrest mit 1 bis 6 Kohlenstoffatomen, einen unsubstituierten oder substituierten Arylrest, einen unsubstituierten oder substituierten Alkoxylrest mit 1 bis 6 Kohlenstoffatomen oder einen unsubstituierten oder substituierten Aryloxylrest stehen
und $R_4$ für einen organischen Rest steht, der mit mindestens einer primären, sekundären oder tertiären Aminogruppe substituiert ist.

5. Verfahren zur Herstellung von Dispersionen von oberflächenmodifiziertem Siliziumdioxid gemäss den Ansprüchen 1 bis 4, **dadurch gekennzeichnet, dass** die Substituenten von $R_1$, $R_2$ und $R_3$ unabhängig voneinander aus der Gruppe bestehend aus Thiol, Sulfid und Polyalkylenoxid ausgewählt werden.

6. Verfahren zur Herstellung von Dispersionen von oberflächenmodifiziertem Siliziumdioxid gemäss den Ansprüchen 1 bis 5, **dadurch gekennzeichnet, dass** das Aminoorganosilan aus der Gruppe bestehend aus 3-Aminopropyltrimethoxysilan, N-(2-Aminoethyl)-3-aminopropyltrimethoxysilan, (3-Triethoxysilylpropyl)-diethylentriamin, 3-Aminopropyltriethoxysilan, N-(2-Aminoethyl)-3-amino-propyltriethoxysilan, (3-Triethoxysilylpropyl)-diethylentriamin oder deren Gemischen ausgewählt wird.

7. Verfahren zur Herstellung von Dispersionen von oberflächenmodifiziertem Siliziumdioxid gemäss den Ansprüchen 1 bis 6, **dadurch gekennzeichnet, dass** die Menge der Verbindung des dreiwertigen Aluminiums zwischen 0.1 und 20 Gewichtsprozent bezogen auf die Menge des Siliziumdioxids beträgt.

8. Verfahren zur Herstellung von Dispersionen von oberflächenmodifiziertem Siliziumdioxid gemäss den Ansprüchen 1 bis 7, **dadurch gekennzeichnet, dass** der pH-Wert der Lösung, welche die Reaktionsprodukte der Verbindung des dreiwertigen Aluminiums und des Aminoorganosilans enthält, zwischen 3 und 10 liegt.

9. Verfahren zur Herstellung von Dispersionen von oberflächenmodifiziertem Siliziumdioxid gemäss den Ansprüchen 1 bis 8, **dadurch gekennzeichnet, dass** das Siliziumdioxid pyrogenes Siliziumdioxid ist.

10. Verfahren zur Herstellung von Dispersionen von oberflächenmodifiziertem Siliziumdioxid gemäss Anspruch 9, **dadurch gekennzeichnet, dass** das pyrogene Siliziumdioxid eine spezifische Oberfläche zwischen 20 $m^2/g$ und 400 $m^2/g$ hat.

11. Verfahren zur Herstellung von Dispersionen von oberflächenmodifiziertem Siliziumdioxid gemäss Anspruch 10, **dadurch gekennzeichnet, dass** zwei oder mehrere Arten von pyrogenem Siliziumdioxid mit unterschiedlichen spezifischen Oberflächen verwendet werden.

12. Verfahren zur Herstellung von Dispersionen von oberflächenmodifiziertem Siliziumdioxid gemäss Anspruch 11, **dadurch gekennzeichnet, dass** die Oberflächenmodifikation der verschiedenen Arten von Siliziumdioxid gleichzeitig in der Mischung erfolgt.

13. Verfahren zur Herstellung von Dispersionen von oberflächenmodifiziertem Siliziumdioxid gemäss Anspruch 11, **dadurch gekennzeichnet, dass** die Oberflächenmodifikation der verschiedenen Arten von Siliziumdioxid für jede Art selbständig erfolgt.

14. Aufzeichnungsmaterial für den Tintenstrahldruck, das auf einem Träger mindestens eine Tintenaufnahmeschicht bestehend aus mindestens einem Bindemittel und mindestens einer Dispersion von oberflächenmodifiziertem Siliziumdioxid gemäss den Ansprüchen 1 bis 13 enthält.

15. Aufzeichnungsmaterial für den Tintenstrahldruck gemäss Anspruch 14, **dadurch gekennzeichnet, dass** als Bindemittel Polyvinylalkohol, Gelatine, Derivate des Polyvinylalkohols, Polyvinylpyrrolidon oder Mischungen dieser Verbindungen verwendet werden.

16. Aufzeichnungsmaterial für den Tintenstrahldruck gemäss den Ansprüchen 14 und 15, **dadurch gekennzeichnet, dass** das Aufzeichnungsmaterial mit Borsäure gehärtet wird.

17. Aufzeichnungsmaterial für den Tintenstrahldruck gemäss den Ansprüchen 14 bis 16, **dadurch gekennzeichnet, dass** das Aufzeichnungsmaterial mehrere Tintenaufnahmeschichten besitzt.

18. Aufzeichnungsmaterial für den Tintenstrahldruck gemäss Anspruch 17, **dadurch gekennzeichnet, dass** in den

verschiedenen Tintenaufnahmeschichten pyrogenes Siliziumdioxid mit unterschiedlichen spezifischen Oberflächen verwendet wird.

**19.** Aufzeichnungsmaterial für den Tintenstrahldruck gemäss Anspruch 17, **dadurch gekennzeichnet, dass** das in den verschiedenen Tintenaufnahmeschichten verwendete Siliziumdioxid sich in der Art der Umsetzung mit den Reaktionsprodukten einer Verbindung des dreiwertigen Aluminiums und mindestens eines Aminoorganosilans gemäss den Ansprüchen 1 bis 8 unterscheidet.

**20.** Aufzeichnungsmaterial für den Tintenstrahldruck gemäss Anspruch 17, **dadurch gekennzeichnet, dass** die verschiedenen Tintenaufnahmeschichten ein unterschiedliches Verhältnis von Bindemittel zu Siliziumdioxid besitzen.

**21.** Aufzeichnungsmaterial für den Tintenstrahldruck gemäss den Ansprüchen 16 und 17, **dadurch gekennzeichnet, dass** in den verschiedenen Tintenaufnahmeschichten unterschiedliche Mengen Borsäure verwendet werden.

**22.** Aufzeichnungsmaterial für den Tintenstrahldruck gemäss den Ansprüchen 10 bis 21, **dadurch gekennzeichnet, dass** als Träger beschichtetes oder unbeschichtetes Papier, durchsichtiger oder opaker Kunststoffträger bestehend aus Polyester oder Polypropylen oder textile Fasermaterialien verwendet werden.

**23.** Aufzeichnungsmaterial für den Tintenstrahldruck gemäss den Ansprüchen 10 bis 22, **dadurch gekennzeichnet, dass** das Aufzeichnungsmaterial mit Hilfe des Extrusions-, Luftmesser-, Schlitz-, Kaskaden- oder Vorhanggussverfahrens hergestellt wird.

Europäisches Patentamt

# EUROPÄISCHER RECHERCHENBERICHT

Nummer der Anmeldung
EP 04 10 5031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 342 787 A (DU PONT DE NEMOURS CO E I) 3. Januar 1974 (1974-01-03) * Seite 1, Zeile 26 - Zeile 48 * * Seite 2, Zeile 16 - Zeile 125 * * Seite 3, Zeile 22 - Zeile 42; Beispiel 1 * | 1-13 | C09C1/30 B41M5/00 |
| Y,D | WO 00/20221 A (CABOT CORPORATION) 13. April 2000 (2000-04-13) * Seite 2, Zeile 13 - Seite 4, Zeile 22 * * Seite 5, Zeile 18 - Zeile 28; Ansprüche 15,19,24 * * Seite 5, Zeile 7 - Zeile 18 * * Seite 18, Zeile 17 - Seite 20, Zeile 6 * | 1-13 | |
| Y | EP 0 663 620 A (MINNESOTA MINING AND MANUFACTURING COMPANY) 19. Juli 1995 (1995-07-19) * Seite 3, Zeile 58 - Seite 4, Zeile 4 * * Seite 5, Zeile 6 - Zeile 30; Beispiel 1 * | 1-13 | |
| | | | RECHERCHIERTE SACHGEBIETE (Int.Cl.7) |
| Y | EP 1 262 455 A (NIPPON AEROSIL CO., LTD) 4. Dezember 2002 (2002-12-04) * Absätze [0002] - [0009], [0011] - [0014], [0019] - [0022] * | 1-13 | C09C B41M |
| A | US 2003/181566 A1 (CHAPMAN DAVID MONROE ET AL) 25. September 2003 (2003-09-25) * Ansprüche 32,34,35 * | 1-23 | |

Der vorliegende Recherchenbericht wurde für alle Patentansprüche erstellt

| Recherchenort | Abschlußdatum der Recherche | Prüfer |
|---|---|---|
| Den Haag | 29. April 2005 | Siebel, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 04 10 5031

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2005

| Im Recherchenbericht angeführtes Patentdokument | Datum der Veröffentlichung | Mitglied(er) der Patentfamilie | Datum der Veröffentlichung |
|---|---|---|---|
| GB 1342787 A | 03-01-1974 | DE 2107085 A1 | 04-11-1971 |
| | | FR 2080547 A5 | 19-11-1971 |
| WO 0020221 A | 13-04-2000 | AU 6281399 A | 26-04-2000 |
| | | DE 69922532 D1 | 13-01-2005 |
| | | EP 1124693 A1 | 22-08-2001 |
| | | JP 2002526564 T | 20-08-2002 |
| | | WO 0020221 A1 | 13-04-2000 |
| | | US 6420039 B1 | 16-07-2002 |
| EP 0663620 A | 19-07-1995 | US 5411787 A | 02-05-1995 |
| | | CA 2130036 A1 | 20-04-1995 |
| | | CN 1103961 A | 21-06-1995 |
| | | EP 0663620 A2 | 19-07-1995 |
| | | JP 7179073 A | 18-07-1995 |
| EP 1262455 A | 04-12-2002 | EP 1262455 A1 | 04-12-2002 |
| | | WO 0121529 A1 | 29-03-2001 |
| US 2003181566 A1 | 25-09-2003 | US 2003191226 A1 | 09-10-2003 |
| | | US 2004241425 A1 | 02-12-2004 |
| | | AU 769380 B2 | 22-01-2004 |
| | | AU 4579899 A | 01-02-2000 |
| | | BR 9911918 A | 11-12-2001 |
| | | CA 2337193 A1 | 20-01-2000 |
| | | CN 1328504 A | 26-12-2001 |
| | | CZ 20010109 A3 | 12-09-2001 |
| | | EA 3067 B1 | 26-12-2002 |
| | | EP 1094953 A1 | 02-05-2001 |
| | | ID 23474 A | 27-04-2000 |
| | | JP 2002520424 T | 09-07-2002 |
| | | NO 20010125 A | 08-03-2001 |
| | | PL 348044 A1 | 06-05-2002 |
| | | TR 200100017 T2 | 23-07-2001 |
| | | TW 467832 B | 11-12-2001 |
| | | WO 0002734 A1 | 20-01-2000 |
| | | ZA 200101006 A | 16-05-2001 |

EPO FORM P0461

Für nähere Einzelheiten zu diesem Anhang : siehe Amtsblatt des Europäischen Patentamts, Nr.12/82